# EUROPEAN PATENT APPLICATION

(11) **EP 2 448 071 A1**
(43) Date of publication of application: **02.05.2012**
(21) Application number: 10189167.9
(22) Date of filing: 28.10.2010
(51) Int. Cl.: H01R 13/641, H01R 13/717, H04Q 1/14, H01R 24/64

(54) **Telecommunication connecting device**

(71) Applicant: 3M Innovative Properties Company, Saint Paul, MN 55133-3427 (US)
(72) Inventor: Nesme, Mathieu, 74000, Annecy (FR); Metral, Guy, 74300, Cluses (FR); Dautricourt, David, 74300 Chatillon sur Cluses (FR)
(74) Representative: Bergen, Katja

(57) **Abstract**

A connecting device for a shielded telecommunication line, the connecting device comprising two or more signal contacts 210, a shielding contact 220, and an electrical indicator device 100, wherein the electrical indicator device 100 is electrically connected such that it can be provided with electrical power through the shielding contact 220 and one of the signal contacts 210. Also disclosed is a shielded telecommunication line comprising the connecting device, a patch panel device or wall outlet comprising the connecting device, and a power supply for providing electrical power to the indicator device 100 of the connecting device.

## Description

This invention relates to electrical connecting devices in telecommunication applications. Specifically, the invention relates to the identification and location of the connecting devices for use with shielded telecommunication lines in patch panel applications.

Modern office buildings often have wiring cabinets in which incoming telecommunication lines are connected to interior communication lines that lead to individual telephones and computer workstations within the building. Some internal telecommunication lines lead from an interconnecting device, a so-called patch panel device, in a wiring cabinet through ducts in building walls to wall outlets next to computer workstations or telephones in different parts of a building. When maintenance is required, the ends of one such internal telecommunication line need to be found and identified. Often, electrical measurements between various wall outlets and various patch panel device ports are performed in order to identify the two corresponding ends of one internal telecommunication line.

The connection between incoming telecommunication and data lines and the internal communication lines is often done by intermediate telecommunication lines called patch cables or patch cords, running between connecting devices on a patch panel device and connecting devices on the same or on a different patch panel device. In wiring cabinets, most of these patch cables are shielded in order to reduce electrical interference with other patch cables. In large office buildings, hundreds of patch cables may be found in a wiring cabinet. When a re-connection or maintenance is required, the two ends of a patch cable are sometimes identified by manually following the path of the patch cable from one of its ends through the wiring cabinet to its other end, a method which is often time consuming and unreliable. In order to avoid the disadvantages of this manual identification process, patch cables have been developed that have lights at their ends which can be activated simultaneously, thus making identification of the ends of a patch cable quicker and more reliable.

An example of such a patch cable is described in U.S. patent application 2006/0046580, which utilizes an unused existing pair of wires in a cable to send, from one end of a patch cable, a DC voltage when activated to illuminate a light-emitting diode in the opposite end of the patch cable. Each connector, attached to each end of the cable, has an integrated source of DC voltage which can be selectively placed across a pair of leads upon the activation of an integral switch within each connector. In a device according to this patent application, two unused signal leads are used for power transmission to an LED.

U.K. patent application GB 2 375 898 describes a tracing device connectable to each end of a patch cord, which comprises a switching means and an indicating means. The indicating means on both tracing devices being activated when the switch on either of the tracing devices is closed. The device takes power from the working telecommunications circuit to activate indicating means and accordingly does not require a separate power supply. The device is not an integral part of a patch cord. Installing such adaptors on the ends of many patch cords and patch panel jacks is time consuming and costly.

European patent application EP 849 602 describes a system for locating corresponding ends of a patch cord which includes a cable having a main transmission means and a pair of electrically conductive members extending along the length of the cable. Connectors attached to the ends of the cable are adapted to mate with respective receptacles, to one of which is attached an electrical indicator, electrically connected to the pair of leads when the connector is mated to the receptacle. Current is applied through the conductive members so that the indicator is activated. Having two extra conductive members results in extra cost, weight and space being required for providing these conductive members. The pair of conductive members through which current is applied is not part of the main transmission means, i.e. these conductive members are not used for signal transmission. For a cable with a given number of conductive members, this results in the signal transmission capacity of the cable not being exploited to a maximum.

There is a need to fully exploit and increase the signal transmission capacity of shielded telecommunication lines that have electrical indicators at one end or several of their ends. The present invention seeks to address this problem by providing a connecting device, a shielded telecommunication line and a patch panel device, in which the supply of electrical power to the indicator affects as little as possible the full exploitation of signal transmission capabilities. It further seeks to increase the signal transmission capacity of shielded telecommunication lines having indicators, as compared to existing approaches. It also seeks to provide a device that offers greater flexibility in the voltage used to supply power to indicator device.

The present invention provides a connecting device for a shielded telecommunication line, the connecting device comprising two or more signal contacts, a shielding contact, and an electrical indicator device, wherein the electrical indicator device is electrically connected such that it can be provided with electrical power through the shielding contact and one of the signal contacts.

The present invention also provides a connecting device for a shielded telecommunication line, the connecting device comprising two or more signal contacts, a shielding contact, and an electrical indicator device, wherein the electrical indicator device is electrically connected to the shielding contact and to one of the signal contacts for providing the electrical indicator device with electrical power through the shielding contact and the one of the signal contacts.

In the context of this invention, a telecommunication line may be a line over which telecommunication signals are electrically transmitted, and which may have a connecting device at one end or at two ends or at several of its ends. As the supply of electrical power to an electrical indicator device normally requires at least two contacts, it is beneficial to use a shielding contact as the first of these contacts, and use a single signal contact as the second, because this will reduce the signal transmission capacity of only one signal contact, as the shielding contact is normally not used for signal transmission. Although electrical power can be supplied over a signal contact of a shielded telecommunication line that is simultaneously transmitting a signal, the signal transmission capacity of the shielded telecommunication line is normally reduced while the power is being supplied. Because, according to the invention, only a single signal contact is being utilized to supply power to the indicator, the signal transmission capacity of a shielded telecommunication line, that has a connecting device according to the present invention, can be exploited to a higher degree than in conventional designs.

A further benefit of the connecting device according to the invention is that in certain telecommunication standards, the requirement for minimum breakdown voltage between two signal contacts is lower than for minimum breakdown voltage between a signal contact and the shielding contact of a shielded telecommunication line. For this reason, a higher voltage can be applied between shielding and a signal contact than between two signal contacts without risking an electrical breakdown and subsequent damage to the telecommunication line. This allows for electrical power being supplied to the indicator device at higher voltages and lower currents. Lower currents, in turn, will result in weaker magnetic and electric fields and less degradation of signal quality in the wires of the shielded telecommunication line, particularly in high-frequency applications.

In another aspect, the invention provides a connecting device as described above, wherein the electrical indicator device is a light-emitting device. A light-emitting device may provide immediate and precise information on the location of the end of a telecommunication line to an installer. Many light-emitting devices, for example light-emitting diodes or LEDs, consume very little power and can be driven with low voltage. Transmitting little power and/or low voltage through the shielding contact and a signal contact of the connecting device of the present invention will minimally affect the signal transmission capacity of a shielded telecommunication line, to which the connecting device might be connected. Also, a light-emitting device often does not interfere with electrical data transmission through telecommunication lines and connecting devices.

In another aspect, the invention provides a connecting device as described above, wherein the connecting device is adapted to be manually unmated from a corresponding connecting device and to be manually re-mated with a corresponding connecting device. Manual mating and unmating of connecting devices at the ends of shielded telecommunication lines may, for example, allow for quick disconnection of a telecommunication line from one patch panel device port and quick reconnection to a different patch panel device port and may facilitate time-effective installations of telecommunication systems.

In a further aspect of the invention, a connecting device, as described above, is provided wherein the connecting device is a plug adapted to cooperate with an RJ45-type jack, or wherein the connecting device is a jack adapted to cooperate with an RJ45-type plug. RJ45 type plugs are compatible to many existing telecommunication systems. An RJ45-type connecting device having an indicator device that is supplied with power through a shielding contact provides enhanced functionality and exploits to a maximum the signal transmission capacity of the shielded telecommunication line of which it forms a part.

In another aspect, the invention provides a connecting device as described above, wherein the shielding contact is adapted to be permanently connected to a shielding conductor of a shielded telecommunication line. A permanent connection between the shielding contact and the shielding conductor may be more robust and more reliable than a temporary connection. An example of a permanent connection may be a welded or soldered connection.

In another aspect, the invention provides a connecting device as described above, wherein the connecting device is a plug, the plug comprising a first externally accessible feed contact and a second externally accessible feed contact, the first feed contact being electrically connected with one of the signal contacts and the second feed contact being electrically connected with the shielding contact, such that the electrical indicator device can be provided with electrical power from an external power source through the first and second feed contacts. A connecting device having externally accessible feed contacts can be used to supply power to an indicator device according to the present invention, when that connecting device is mated with a corresponding connecting device, i.e. when its signal contact(s) and its shielding contact are not accessible. In this way, the signal path in a chain of shielded telecommunication lines, connected through mated connecting devices according to this aspect of the present invention, can remain uninterrupted even when power is supplied to an indicator device of a connecting device according to the invention. This reduces the risk of errors that might otherwise occur when re-mating connecting devices with each other after supplying power to an indicator device. It also increases the operational availability of the telecommunication system of which the connecting device is a part, because no unmating between connecting devices is required to identify the ends of a shielded telecommunication line.

In another aspect, the invention provides a connecting device having feed contacts as described above, wherein the feed contacts are externally accessible from a direction which is substantially different from the direction from which a signal contact is accessible. While the signal contacts of most connecting devices, like for example plugs and jacks, are accessible from the front side of the connecting device, it is beneficial to have feed contacts which are accessible from other directions. The feed contacts may, for example, be externally accessible from an upper side or a lower side of the connecting device. They may also be externally accessible from a lateral side or from the rear side of the connecting device. Access from a different direction may make external access to the feed contacts easier, because mechanical interference with other elements can be avoided. Also, access from a different direction may allow positioning of the feed contacts more distant from the front of the connecting device, which is the area in which signal contacts may be accessible from a front direction. Any element designed for contacting the feed contacts may therefore be of a more robust construction, which in turn may make contact to the feed contacts more reliable.

In another aspect, the invention provides a shielded telecommunication line comprising a connecting device as described above. Such a shielded telecommunication line may be, for example, a patch cable or a patch cord, or it may be a cable that is connected to a jack mounted in or on a patch panel device or on a wall outlet. A shielded telecommunication line according to this aspect of the invention provides enhanced signal transmission capabilities, because, in the connecting device, the shielding contact is used for power supply, and only one signal contact is required to supply power to the indicator device. Also, there is a lower risk of damage to the shielded telecommunication line through voltage breakdown, since the power to the indicator device is supplied through a signal contact and the shielding contact, which often have a higher breakdown rating than two signal contacts would have. Shielded telecommunication lines, for example patch cables, comprising a connecting device in accordance with the present invention are quick and easy to locate and identify, e.g. in wiring cabinets.

In another aspect, the invention provides a patch panel device or a wall outlet comprising a connecting device as described above. Such a patch panel device or wall outlet provides enhanced signal transmission capabilities, because, in the connecting device, the shielding contact is used for power supply to the indicator device, and only one signal contact is required to supply power to the indicator device. Also, such a patch panel device or wall outlet may facilitate installation or maintenance of a telecommunication system, because it allows for quick and easy identification and location of connecting devices that it comprises.

In another aspect, the invention provides a power supply for providing electrical power to an electrical indicator device of a connecting device as described above, the power supply comprising a connecting interface comprising output contacts which are adapted to simultaneously be in contact with a signal contact and the shielding contact, respectively, of a connecting device as described above. Such a power supply allows for providing power to an indicator device in a very flexible manner. Through its connecting interface it may be connectable to a connecting device in accordance with the present invention in a particularly reliable fashion, because the connecting interface may be designed specifically for connection to the connecting device.

The contact between the output contacts of the connecting interface and the shielding and signal contacts of a connecting device according to the present invention may be releasable. A connecting interface providing a releasable contact may be used over and over again for identifying and locating ends of shielded telecommunication lines.

In yet another aspect, the invention provides a power supply for providing electrical power to an electrical indicator device of a connecting device as described above, the power supply comprising a connecting interface comprising output contacts which are adapted to simultaneously be in contact with the feed contacts of a connecting device as described above. Such a power supply may allow for connection to shielded telecommunication lines, in which a connecting device is mated with a corresponding connecting device, so that its signal contacts and/or its shielding contact are not directly accessible any more. Instead of having to unmate the two connecting devices and mate output contacts of a power supply to one of the connecting devices, this power supply my allow for the connecting devices to remain mated with each other, and for power being supplied to an electrical indicator device through feed contacts of one of the connecting devices.

In a further aspect, the invention provides a power supply for providing electrical power to an electrical indicator device of a connecting device as described above, comprising a connecting interface comprising output contacts which are adapted to simultaneously be in contact with a signal contact and the shielding contact, respectively, of a connecting device as described above, and further comprising a connecting interface comprising output contacts, which are adapted to simultaneously be in contact with the feed contacts of a connecting device as described above. A power supply equipped with both types of connecting interfaces may be a versatile tool in the installation of telecommunication systems, as it may avoid the need of having two separate power supplies.

In a further aspect, the invention provides a power supply as described above, providing electrical power by providing alternating voltage between two of its output contacts. Some electrical indicator devices like, for example, many LEDs, can be easily operated with alternating voltage.

In a further aspect, the invention provides a power supply as described above, which provides electrical power by providing alternating voltage between two of its output contacts, wherein the frequency of the alternating voltage is between 1 kilohertz ("kHz") and 1000 kilohertz. This frequency range is particularly suitable to drive many electrical indicator devices.

In a further aspect, the invention provides a power supply as described above, which provides electrical power by providing a voltage between 0.1 Volt and 100 Volt between two of its output contacts. This voltage range is advantageous in that it poses no risk of electrical discharge to many patch cords and patch panel devices, and is appropriate to drive many electrical indicator devices like, for example, LEDs, without a need for voltage transformation.

The invention will now be described in more detail with reference to the following Figures exemplifying particular embodiments of the invention:

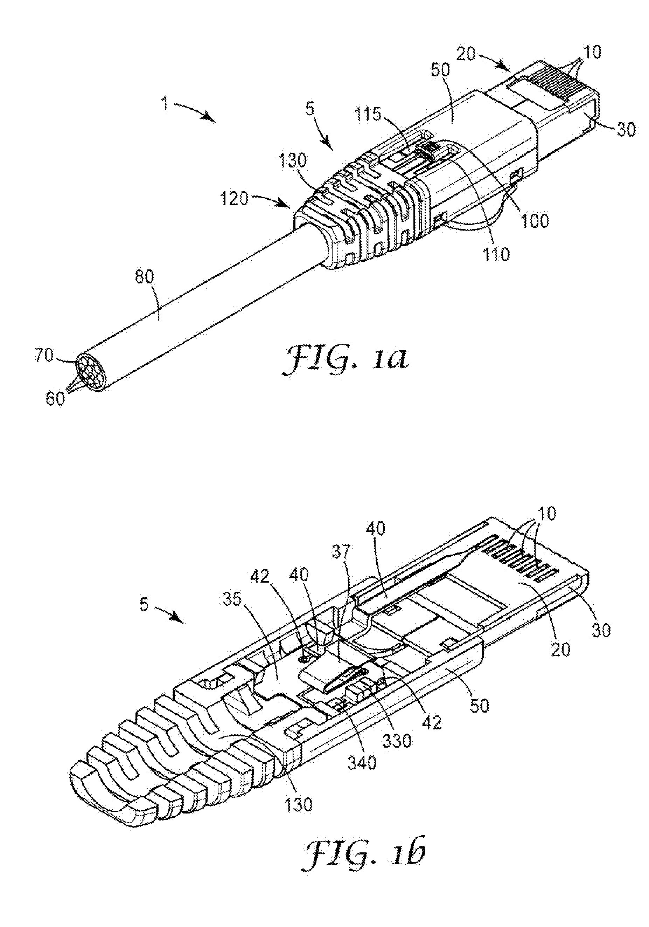

Figure 1a: Perspective view of a connecting device according to the invention;
Figure 1 b: Cross-sectional perspective view of the interior of the connecting device of Figure 1 a;
Figure 2a: Perspective view of a different connecting device according to the invention;
Figure 2b: Cross section of the interior of the connecting device of Figure 2a;
Figure 3: Electrical diagram of the electrical connection of an indicator device according to the present invention;
Figure 4: Electrical diagram of a patch cable having connecting devices according to the present invention;
Figure 5: Electrical diagram of two patch cables and their connection, according to the present invention;
Figure 6: Electrical diagram of a connecting device according to the present invention, having feed contacts;
Figure 7: Perspective view of a power supply according to the present invention;
Figure 8: Perspective view of a connecting interface of the power supply of Figure 7; and
Figure 9: Perspective view of a different connecting interface of the power supply of Figure 7.

Herein below various embodiments of the present invention are described and shown in the drawings wherein like elements are provided with the same reference numbers. The accompanying drawings show, by way of illustration, specific embodiments in which the invention may be practiced. It is to be understood that other embodiments may be utilized and structural or logical changes may be made without departing from the scope of the present invention. The following detailed description therefore is not to be taken in a limiting sense, and the scope of the invention is defined by the appended claims.

A connecting device according to the present invention may, for example, be a plug or a jack or a receptacle for receiving a plug. In an exemplary aspect, a connecting device according to the present invention is designed to be mounted on the end of a shielded telecommunication line or cable, for example on the end of a shielded patch cable.

### The Figures will now be described in detail.

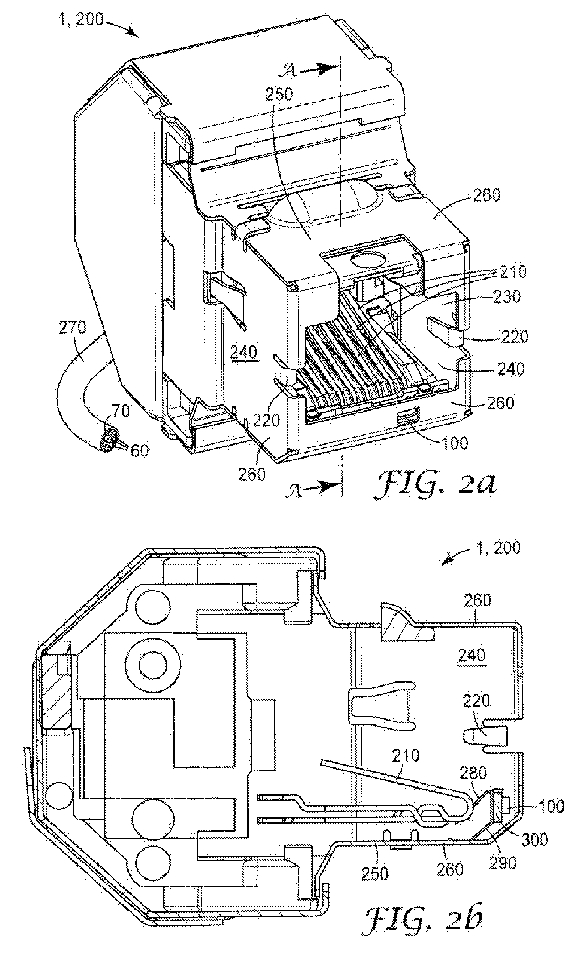

Figure 1a is a perspective view of a connecting device 1 according to the present invention. In the first exemplary embodiment, the connecting device 1 is a modular plug 5. It is designed to be mated with a receptacle, such as a modular jack 200 shown in Figures 2a and 2b. The plug 5 has eight signal contacts 10 and a shielding contact 30, parts of which are accessible at the contact end 20 of the plug 5. Other parts of the signal contacts 10 and the shielding contact 30 are located within the housing 50 of the plug. Within the housing 50, each signal contact 10 is electrically connected with a signal wire 60 of a shielded cable 80, and the shielding contact 30 is permanently electrically connected with a shielding conductor 70 of the shielded cable 80.

When the plug 5 is inserted into a jack 200, i.e. when the plug 5 is mated with the jack 200, like for example a jack as described in relation to Figure 2a below, the signal contacts 10 of the plug 5 are brought in contact with corresponding signal contacts 210 of the jack 200, and the shielding contact 30 of the plug 5 is brought in contact with a corresponding shielding contact 220 of the jack. The housing 50 of the plug 5 is made of an electrically insulating plastic material.

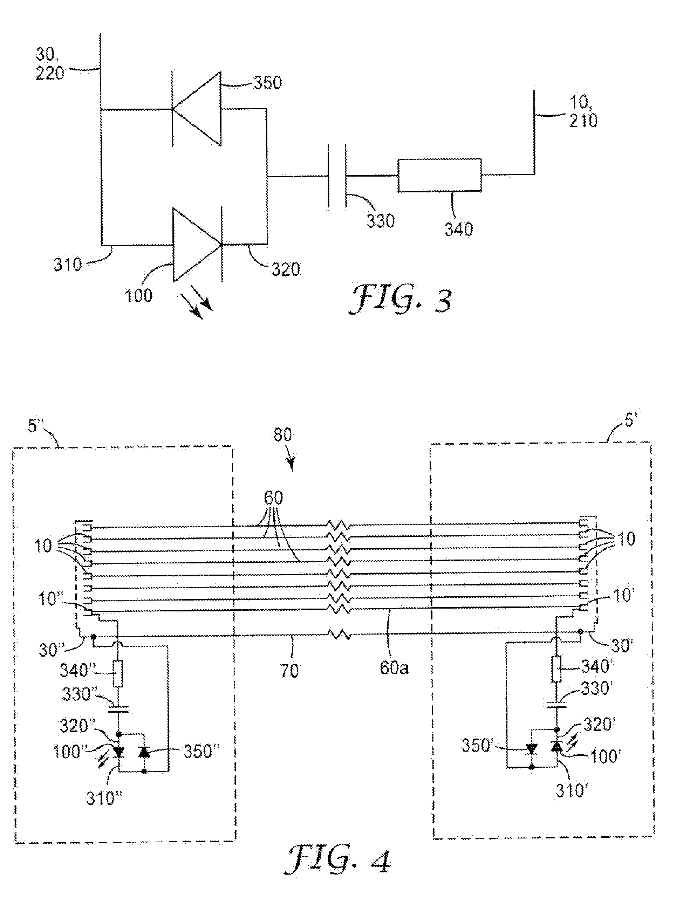

The plug 5 includes an electrical indicator device 100, which is in this embodiment a light-emitting diode (LED) 100. The light-emitting surface of the LED 100 is mounted flush with the outer surface of housing 50, such that it is easily visible. The LED 100 has two power leads 310, 320 (see Figure 3), one of which is electrically connected to one of the signal contacts 10, the other power lead is electrically connected to the shielding contact 30, as shown in more detail in Figure 4. These connections are located within housing 50, and are thus not visible in this Figure. The following Figure 1b provides more details of the interior of the plug 5.

Plug 5 is further provided with two externally accessible feed contacts 110, 115 that are accessible from the outside of the plug 5. The feed contacts 110, 115 are recessed within the housing 50 of plug 5, so that they can not be touched accidentally when the plug 5 is handled. Both feed contacts 110, 115 are made from conductive material. Within the housing 50, one feed contact 110 is electrically connected with one of the signal contacts 10, and the other feed contact 115 is electrically connected with shielding contact 30 of the plug 5.

The shielded cable 80 enters the housing 50 of plug 5 at a cable end 120 of the housing 50. Additionally, the plug 5 has a flexible strain relief boot 130 attached to the cable end of the housing to prevent sharp bending of the signal wires 60 and shielding conductor 70 in the cable 80 in an area adjacent to the plug 5.

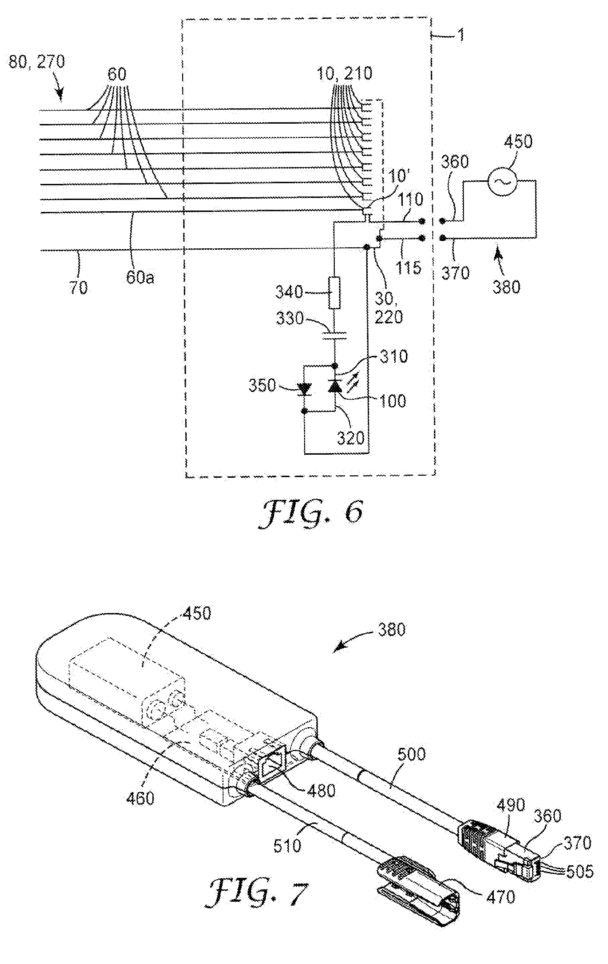

While Figure 1 a is a view of the plug 5 from above, **Figure 1b** shows, in cross-section, the interior of the plug 5 of Figure 1 a as viewed from below, with the shielded cable 80 removed. The plug 5 includes a printed circuit board ("PCB") 35, which provides for electrical connections between components mounted on it. On the underside of the PCB 35 which is visible in this Figure, a resilient, conductive braid patch 37 is mounted. When a patch cable 80 with a shielding conductor 70 is connected to the plug 5, the shielding conductor 70 of the cable 80 is arranged such as to contact the braid patch 37. Often, the shielding conductor 70 of a cable 80 is also in the form of a braid, that is arranged around the signal wires 60 of the cable, so that the contact between the shielding conductor 70 and the braid patch 37 is easily established by removing the sheath of the cable 80, exposing the shielding conductor 70, and making contact between the shielding conductor 70 and the resilient braid patch 35. The braid patch 35 is electrically connected to one of the power leads 310, 320 of the indicator device 100, located on the other side of the PCB 35. The electrical connection of the power leads is shown schematically in Figures 3 and 6. The connection from the underside of the PCB 35 to the opposite side is done by a conductive through-hole or a "via" 42. A rear part of the shielding contact 30 is clamped over the shielding conductor 70 of the cable 80. The braid patch 35 is electrically connected to the shielding contact 30 of the plug 5 through the cable shielding conductor 70.

Also mounted on the underside of the PCB 35 are a capacitor 330 and a resistor 340 which protect the indicator device 100, as described in the context of Figure 3 below.

The signal wires 60 of a cable 80 are permanently connected ("terminated") to the signal contacts 10 of the plug 5 such as by welding or soldering. One of the signal contacts 10 (the leftmost in this Figure) is electrically connected to the underside of the PCB 35 through contact pad 40. The conductive through-hole or via 42 provides an electrical connection from a conductive path on the underside of the PCB 35, to which the contact pad 40 is connected, to the opposite side of the PCB 35, where a further electrical connection is provided to the other one of the power leads 310, 320 of the indicator device 100.

For example, when the plug 5 is installed on the end of a patch cable 80, the contact pad 40 provides for an electrical connection of one signal wire 60 of the cable 80 and one signal contact 10 to one of the power leads 320 of the indicator device 100, and the braid patch 37 provides for electrical connection of the shielding conductor 70 of the cable 80 and shielding contact 30 of the plug to the other one of the power leads 310 of the indicator device 100, as shown in Fig. 3.

In a second exemplary embodiment, shown in **Figure 2a****,** the connecting device 1 according to the present invention is a receptacle such as a jack 200, shown in a perspective view. The modular jack 200 is designed to be mated with a plug 5 such as the modular plug 5 of Figure 1 a.

The modular jack 200 has eight conductive signal contacts 210 that are resilient and establish a reliable electrical contact with signal contacts of the plug 5 upon mating. The modular jack 200 is also provided with two conductive resilient shielding contacts 220 that protrude towards the inside of a cavity 230 of the jack 200.

When modular plug 5 is mated with the modular jack 200, the modular plug 5 is inserted into the cavity 230, and the signal contacts 210 of the jack 200 are brought into electrical contact with signal contacts 10 of the plug 5, so that electrical signals can be transmitted between them, and the shielding contacts 220 of the jack 200 are brought into electrical contact with shielding contact 30 of the modular plug 5.

The jack 200 has an outer housing 250, comprising side walls 240. The outer housing 250 comprises conductive metal, which forms essentially all external surfaces of the jack 200. By virtue of being electrically conductive, the outer housing 250 shields electromagnetic radiation from the signal contacts 210 and essentially prevents such radiation from being radiated into the environment and it shields the signal contacts 210 against electromagnetic radiation that might emerge from adjacent devices or patch cords. The outer housing 250 thus forms a shielding conductor 260 for the modular jack 200. The shielding conductor 260 essentially envelopes the interior of jack 200. It is electrically connected with the shielding contacts 220.

Within the outer housing 250, each signal contact 210 is electrically connected to a signal wire 60 of a cable 270, and shielding contacts 220 are electrically connected to a shielding conductor 70 of a cable 270 in a known manner. Outside of the jack 200, signal wires 60 and shielding conductor 70 are arranged within the sheath of the cable 270.

Once the plug 5 of the patch cord 80 is mated with the jack 200, electrical signals can be transmitted from the patch cord 80 through the plug 5 and jack 200 into the cable 270, or vice versa. Also, once mated, the shielding conductor 70 of the patch cord 80 is electrically connected, through the respective shielding contacts 30, 220 of plug 5 and jack 200, with the shielding conductor 70 of cable 270, so that continuous and uninterrupted shielding is provided.

The plug 5 and the jack 200 can be manually mated and manually unmated. In the mated position, a latch (not visible in Figures 1 a and 1 b) on the plug 5 secures the plug 5 in the cavity 230 of the jack 200. When being manually unmated, the latch is released and the plug 5 can be removed from the cavity 230 of the jack 200. Thereby, the electrical contact between signal contacts 10 of the plug 5 and signal contacts 210 of the jack 200 is removed. Also, the electrical contact between the shielding contact 30 of the plug 5 and the shielding contact 220 of the jack 200 is removed. For mating, the plug 5 is inserted manually into the cavity 230 of the jack 200, until the plug 5 abuts a rear wall of the jack 200 and the latch engages with a recess (not shown) in the cavity 230 and thereby secures the plug 5 in this position relative to the jack 200.

The jack 200 further comprises an electrical indicator device 100, an LED 100. The indicator device 100 is mounted close to the opening of the cavity 230, in an opening of the outer surface of the outer housing 250, such that it is visible from the front side of the jack 200, i.e. from the side from which a plug 5 can be inserted into the cavity 230. The LED 100 is mounted on a printed circuit board ("PCB") 300 which is mounted inside the housing 250, and which carries other electrical elements, for example a capacitor 330 and a resistor 340 to protect the indicator device 100, as is described below.

**Figure 2b** is a cross section of the interior of jack 200 of Figure 2a, taken in a plane through the dashed line and perpendicular to the arrows A in Figure 2a, with the cable 270, signal wires 60, shielding conductor 70 and other elements removed. The viewing direction is perpendicular to the side wall 240 which is visible in Figure 2a.

The jack 200 comprises the outer housing 250, which is conductive and forms a shielding conductor 260, which is electrically connected to the shielding contact 220. The electrical indicator device 100, the LED, is mounted on the PCB 300 inside the outer housing 250. The PCB 300 provides for electrical connections between components mounted on it. The LED 100 has two power leads 310, 320 (not visible in this Figure) one of which is electrically connected to a one of the signal contacts 210 through a first resilient conductive contact 280. The other power lead is electrically connected to the shielding contact 220 through a second resilient conductive contact 290 and the shielding conductor 260. The resilient conductive contacts 280, 290 are mechanically attached to the PCB 300.

The electrical circuitry for connection of the indicator device 100 is the same in the two types of connecting devices 1 shown in Figures 1a, 1b, 2a, and 2b, respectively. Figure 3 is an electrical diagram, showing the details of the electrical connection of the indicator device 100 in those connecting devices 1. The indicator device 100 is an LED, it has two power leads 310 and 320. Power lead 310 is electrically connected directly with shielding contact 30 of plug 5. Power lead 320 is electrically connected, through capacitor 330 and resistor 340, with one of the signal contacts 10. The capacitor 330 cancels any direct current (DC) through the indicator device 100. The resistor 340 limits the current through the indicator device 100. In parallel circuit with the indicator device 100, a diode 350 is arranged. It closes the electrical circuit for that polarity of the power supplied that can not flow through indicator device 100.

The indicator device 100 may be comprised in a plug 5 or in a jack 200. The electrical circuitry for the connection of the indicator device 100 is the same for both. If the indicator device 100 is comprised in jack 200, its circuit is connected to a signal contact 210 of the jack 200 on one side, and to the shielding contact 220 of the jack 200, on the other side. If the indicator device 100 is comprised in a plug 5, its circuit is connected to a signal contact 10 of the plug 5, and to the shielding contact 30 of the plug 5, respectively.

When voltage is applied to the signal contact 10, 210, electrical current flows through the resistor 340, the capacitor 330 and the power lead 320 to the indicator device 100, and via the power lead 310 and the shielding contact 30, 220 the electrical circuit is closed.

The electrical elements of the circuit of Figure 3 can be chosen for appropriate power supply to indicator device 100. In the embodiment shown in this Figure, power is provided to the indicator device 100, an LED, by applying an AC voltage of 9 Volt (V) at a frequency of 10 kilohertz (kHz) to the signal contact 10, 210 and shielding contact 30, 220. The resistor 340 has a resistance of 680 ohm (Ω), and the capacitor 330 has a capacitance of 1 nano Farad (nF). A skilled person recognizes that it does not matter which end of the circuit of Figure 3 is connected to the signal contact 10, 210, and which end is connected to the shielding contact 30, 220, if the supply voltage is alternating. Hence the Figure just indicates one way of connecting the circuit, where the left end is connected to shielding contact 30, 220, and the right end is connected to signal contact 10, 210. Alternatively, the right end could be connected to shielding contact 30, 220, and the left end could be connected to signal contact 10, 210, without affecting the functionality of the circuit and of the indicator device 100.

**Figure 4** is an electrical diagram of a patch cable 80, that has on each of its ends a connecting device 1 according to the present invention. In this case, the connecting devices 1 are plugs 5' and 5". Each connecting device 1 comprises the circuitry shown in Figure 3. In the connecting device 1 on the left hand side of the diagram, the power leads 310" and 320" of indicator device 100" are connected to the signal contact 10" and to the shielding contact 30", respectively. In the connecting device 1 on the right hand side of the Figure, power leads 310' and 320' of indicator device 100' are connected to the signal contact 10' and to the shielding contact 30', respectively. Signal wires 60 connect the signal contacts 10 of the one plug 5' with the signal contacts 10 of the other plug 5". One signal wire 60a connects the signal contact 10' of the plug 5' and the signal contact 10" of the plug 5" with each other, through which signal contacts 10', 10" electrical power can be provided to the indicator devices 100' and 100" . The shielding conductor 70 connects the shielding contact 30' of the one plug 5' with the shielding contact 30" of the other plug 5".

When a suitable AC voltage is applied between signal contact 10' and shielding contact 30', both indicator devices 100' and 100" light up.

The indicator device 100' on the right hand side of the Figure lights up because the applied voltage is conducted from the signal contact 10' and the shielding contact 30' through the shielding conductor 70 and the signal wire 60a which is connected to signal contact 10' to the power leads 310' and 320'. The indicator device 100" on the left hand side lights up because the applied voltage is conducted from the signal contact 10' and shielding contact 30' through the shielding conductor 70, which is connected to shielding contact 30', and through the signal wire 60a, which is connected to signal contact 10', to the other end of the patch cable 80, via signal contact 10" and shielding contact 30", respectively, to the power leads 310" and 320" of the indicator device 100", respectively.

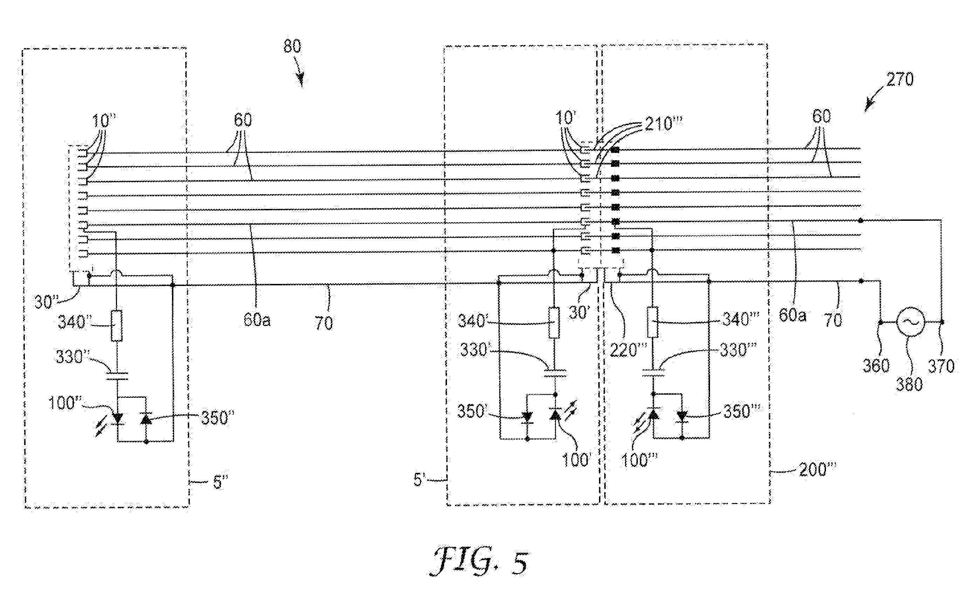

**Figure 5** is a further electrical diagram showing the wiring of a patch cable 80 with two plugs 5' and 5" as shown in Figures 1 a and 1 b, of which plug 5' is mated with the jack 200'" of Figure 2a and 2b. The plugs 5' and 5" are connected with each other through signal wires 60 and a shielding conductor 70. One of the signal wires, labelled 60a, is used to conduct power. Each of the two plugs 5' and 5" of the patch cable and the jack 200'" are equipped with respective indicator devices 100', 100", 100"'. Each of the indicator devices 100', 100", 100"' has its own circuitry of resistor 340', 340", 340"', capacitor 330', 330", 330"' and diode 350', 350", 350"', as explained in Figure 3, and is individually electrically connected with a signal contact 10', 10", 210"' and a shielding contact 30', 30", 220"', of the connecting device 1, i.e. plug 5', 5" or jack 200"', in which it is comprised. The electrical connection to the signal contacts 10', 10", 210"' is achieved by an electrical connection to a signal wire 60a and the shielding conductor 70. The signal wire 60a and the shielding conductor 70 are in turn connected electrically to signal contacts 10', 10", 210'"' and shielding contacts 30', 30", 220"', respectively.

All three indicator devices 100', 100", 100"' are individually connected to the same signal wires 60a. One signal wire 60a is comprised in the patch cable 80, the other signal wire 60a is comprised in the cable 270. The two signal wires 60a are connected with each other through the plug 5' and the jack 200"'. One shielding conductor 70 is comprised in the patch cable 80, the other shielding conductor 70 is comprised in the cable 270. The two shielding conductors 70 are connected with each other through the plug 5' and the jack 200"'.

When voltage is applied between the signal wire 60a and the shielding conductor 70 by electrically connecting the output contacts 360, 370 of a power supply 380 to the signal wire 60a and the shielding conductor 70, respectively, all three indicator devices 100', 100", 100"' are provided with power and light up.

Further cables 80, 270 can be connected with the ones shown in the Figure through further connecting devices 1 comprising indicator devices 100. Because all indicator devices 100 are electrically connected to the same signal wires 60a, voltage can be applied between the shielding conductor 70 and the signal wires 60a anywhere along the chain, and cause all indicator devices 100 in the chain to light up. This allows for easy and convenient identification of all the cables 80, 270 and their connecting devices 1 that are electrically connected with each other. Cables 80, 270 running from a central wiring cabinet to other parts of a building may have a connecting device 1 like a plug 5 or a jack 200 on each end, which connecting device 1 comprises an indicator device 100. When voltage of a power supply 380 is applied to a signal wire 60a and the shielding conductor 70 of a cable 80, 270 in some part of the building, the indicator devices 100 of connecting devices 1 pertaining to those cables 80, 270 will light up along the entire chain of cables 80, 270, so that cable 80, 270 can be easily identified in the wiring cabinet.

**Figure 6** is another electrical diagram of a connecting device 1 according to the present invention, electrically identical with the plug 5' and the jack 200'" of Figure 5, except for the additional feed contacts 110, 115, that are comprised in the connecting device 1. These feed contacts 110, 115 are those shown in Figure 1 a. Figure 6 also shows an external power supply 380, which is shown in more detail in Figure 7. The connecting device 1 may be a plug 5 or a jack 200. The first feed contact 110 is electrically connected to the one of the signal contacts 10, 210, to which indicator device 100 is electrically connected, the second feed contact 115 is connected to the shielding contact 30, 220 of the connecting device 1.

The feed contacts 110, 115 are externally accessible, i.e. accessible from the outside of connecting device 1, in a manner, that an external power supply 380 can apply a voltage between the feed contacts 110, 115. Because the feed contact 110 is electrically connected to the signal contact 10, 210, and because feed contact 115 is electrically connected to the shielding contact 30, 220, any voltage applied between the feed contacts 110, 115 by power supply 380 is also available between that signal contact 10, 210 and the shielding contact 30, 220.

Further, because the power leads 310, 320 of indicator device 100 are connected to that signal contact 10, 210 and to shielding contact 30, 220, respectively, the indicator device 100 lights up when voltage is applied between the feed contacts 110, 115 by power supply 380.

Also, because one signal wire 60a and the shielding conductor 70 are connected to that signal contact 10, 210 and to shielding contact 30, 220, respectively, any voltage applied between the feed contacts 110, 115 by power supply 380 is also available between that signal wire 60a and the shielding conductor 70 anywhere along the cable and at the other end (not shown) of the cable 80, 270.

The power supply 380 provides an alternating (AC) voltage of 9 Volt at a frequency of 10 kilohertz (kHz) to its output contacts 360, 370. When this voltage is applied between a signal wire 60, 60a and shielding conductor 70, there is a risk of electrical discharge between these and the risk of damage to any electrical equipment connected to the cable. However, certain telecommunication cables and the equipment connected to them comply with the IEEE 802.3 standard. This standard requires that active equipment must be capable of sustaining, for an unlimited amount of time, a voltage of 16 Volt on one of the wire pairs. This may make the network run in a downgraded, slower mode, but no damage can be done by applying a voltage of 9 Volt between a signal wire 60a and shielding conductor 70.

In **Figure 7****,** the power supply 380 of Figure 6 is shown in detail. It comprises, in its interior, a battery 450 and electronic circuitry 460 to generate, from the battery voltage, an AC voltage of 9V at a frequency of 10 kHz. The power supply 380 comprises three connecting interfaces 470, 480, 490. Each connecting interface 470, 480, 490 has output contacts 360, 370, although only those of connecting interface 490 are visible in the Figure. Through the output contacts 360, 370 of each connecting interface 470, 480, 490, voltage can be applied between a signal contact 10, 210, and a shielding contact 30, 220 of a connecting device 1 mated to the connecting interface 470, 480, 490. Each connecting interface 470, 480 and 490 is mechanically shaped to be suitable for secure mating with a specific type of connecting device 1, for example a plug 5 or a jack 200, and apply the voltage of the power supply 380 to a signal contact 10, 210, and a shielding contact 30, 220 of that connecting device 1.

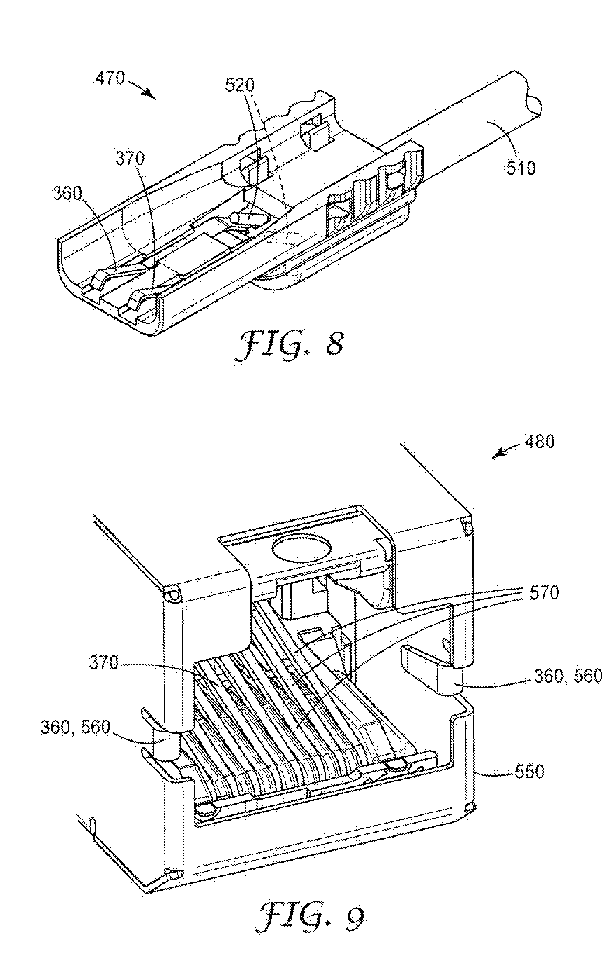

A first connecting interface 480 of the power supply 380 permits to supply power to a chain of cables 80, 270 and connecting devices 1, wherein the connecting device 1 at an end of the chain is a modular plug 5. This connecting interface 480 is described below in connection with Figure 9.

A second connecting interface 490 is connected, through a short cable 500, to the electronic circuitry 460 of the power supply 380. It is a modular plug, specifically a modular plug of the RJ45 type, very similar to the plug 5 of Figures 1 a and 1 b. It has a shielding contact 360 and signal contacts 505. The shielding contact 360 and one of the signal contacts 505 are electrically connected to the battery 450 through circuitry 460. The shielding contact 360 and the one signal contact 505 connected to battery 450 are the output contacts 360, 370 of the connecting interface 490 of the power supply 380.

The connecting interface 490 can be inserted into an unoccupied modular jack 200, so that the signal contacts 210 of the modular jack 200 electrically contact the signal contacts 505 of the connecting interface 490, and the shielding contact 220 of the modular jack 200 electrically contacts the shielding contact 360 of the connecting interface 490. The connecting interface 490 permits to supply power to a chain of cables 80, 270 and connecting devices 1, wherein the connecting device 1 at an end of the chain is a modular jack 200.

The AC output voltage of circuitry 460 is applied between the shielding contact 360 and a signal contact 505 of connecting interface 490. When the connecting interface 490 is inserted into a modular jack 200, that voltage is applied to one specific signal contact 210 and the shielding contact 220 of the jack 200. An indicator device 100 in the jack 200, its power leads 310, 320 being connected to that specific signal contact 210 and the shielding contact 220 of the jack 200, will light up.

Also, when connecting interface 490 is inserted into a modular jack 200, the voltage of power supply 380 is applied, through the signal contact 210 and shielding contact 220 of the jack 200, to a signal wire 60 and the shielding conductor 70 of a cable 270 connected to that modular jack 200. If the cable 270 in turn is connected at its other end to another connecting device 1, the power is transmitted further to the other connecting device 1 at the other end of the cable 270. An indicator device 100, the power leads 310, 320 of which are electrically connected to the shielding conductor 70 and the signal wire 60 of cable 270, respectively, through respective shielding contact 30 and signal contact 10 in that other connecting device 1, will light up.

The third connecting interface 470 is shown in more detail in **Figure 8****,** which is a perspective view of the interior of the connecting interface 470, with one side wall of the connecting interface 470 removed for clarity of the drawing: The connecting interface 470 is a push-on interface, being shaped such that its output contacts 360, 370 can electrically contact the feed contacts 110, 115 of a connecting device 1 in the shape of a plug 5, specifically of a plug 5 of the RJ45 type on one end of a patch cord 80, like the one shown in Figure 1 a. Each output contact 360, 370 is individually electrically connected to a respective corresponding wire 520, which connects the output contact 360, 370 through a cable 510 with the electronic circuitry 460 and the battery 450 of the power supply 380, so that voltage from the power supply 380 can be applied between the output contacts 360, 370 of the connecting interface 470.

The connecting interface 470 permits to supply power to a chain of cables 80, 270 and connecting devices 1 not only at the end of the chain, but through a modular plug 5 in the chain or at an end of the chain. It permits to apply voltage from power supply 380 into the chain through a modular plug 5 that is either inserted into a modular jack 200 or not inserted.

The connecting interface 470 has an essentially U-shaped cross section so that it can be pushed over a plug 5 of a patch cord 80, while the plug 5 is inserted into a jack, for example into the jack of a patch panel device. The connecting interface 470 can also be pushed over a plug 5 of patch cord 80, while the plug 5 is not inserted into a jack. The connecting interface 470 can be pushed over a plug 5 from the cable side of the plug 5 by arranging the connecting interface 470 with the open side of the U-shape around the patch cable 80 entering the plug 5, and then pushing it along the cable 80 towards the plug 5 and over the plug 5, until the two output contacts 360, 370 establish electrical contact with feed contacts 110, 115 of the plug 5. When the power supply 380 is activated, its voltage is applied between the output contacts 360, 370 and conducted to the feed contacts 110, 115 and further to a signal contact 10 and the shielding contact 30 of the plug 5, to which the power leads 310, 320 of indicator device 100 of that plug 5 are connected. The indicator device 100 of that plug 5 will thereby light up.

If the patch cord 80 comprises on its other, far end a second connecting device 1 according to the present invention, the voltage from power supply 380 may also be conducted from the signal contact 10 and the shielding contact 30 of the plug 5 through a signal wire 60 and the shielding conductor 70 of the patch cord 80 to that second connecting device 1 on the far end of the patch cord 80, so that the indicator device 100 in the second connecting device 1 receives voltage from the power supply 380 and lights up, too. Figure 4 shows an electrical diagram of such a patch cord 80.

Although the indicator device 100 of the first plug 5 lights up when the connecting interface 470 of the power supply 380 is pushed over the first plug 5, it is not visible to an observer, because it is covered by the connecting interface 470 itself. This, however, is not a disadvantage, because it is the far end of the patch cord 80, that an installer normally intends to locate, when he attaches the connecting interface 470 to the plug 5 at a near end of the patch cord 80.

**Figure 9** shows the connecting interface 480 of the power supply 380 of Figure 7 in more detail. This connecting interface 480 is a jack 550, specifically a modular jack of the RJ45 type. It has a shielding contact 560 and signal contacts 570. The shielding contact 560 and one of the signal contacts 570 are electrically connected to the battery 450 through the circuitry 460. The shielding contact 560 and the one signal contact 570, which are connected to the battery 450, are the output contacts 360, 370 of the connecting interface 480 of the power supply 380. A modular plug 5 of a patch cable 80 can be inserted into connecting interface 480, so that the signal contacts 10 of the modular plug 5 electrically contact the signal contacts 570 of the connecting interface 480, and the shielding contact 30 of the modular plug 5 electrically contacts the shielding contact 560 of the connecting interface 480.

The AC output voltage of the circuitry 460 is applied between the output contacts 360, 370 of the connecting interface 480. When a modular plug 5 at one end of a patch cable 80 is inserted into connecting interface 480, that AC output voltage is applied to one signal contact 10 and the shielding contact 30 of the plug 5. An indicator device 100 in the inserted plug 5, its power leads 310, 320 being connected to the one of the signal contacts 10 and the shielding contact 30 of the plug 5, will light up. Also, when the modular plug 5 at one end of a patch cable 80 is inserted into the connecting interface 480, the voltage of power supply 380 is applied, through the output contacts 360, 370 and through the one of the signal contacts 10 and shielding contact 30 of the plug 5, to a signal wire 60 and the shielding conductor 70 of the patch cable 80, and further to the other plug 5 at the other end of the patch cable 80. An indicator device 100, the power leads 310, 320 of which are electrically connected to the shielding conductor 70 and the one signal wire 60, respectively, through respective shielding contact 30 and a signal contact 10 in that other plug, will light up.

It is apparent from the above that the indicator devices 100 in a chain of patch cords 80 and cables 270, connected through connecting devices 1, can only light up if their power leads 310, 320, are connected to power supply 380. In order to ensure proper electromagnetic shielding, the shielding contacts 30, 220 of the connecting devices 1 and the shielding conductors 70 of cables 80, 270 are all connected electrically. This continuous chain of shielding contacts 30, 220 and shielding conductors 70 between the connecting interfaces 470, 480, 490 of power supply 380 at one end and the farthest connecting device 1 at the other end of the chain ensures that power is supplied from the power supply 380 to all indicator devices 100 along the chain.

However, in order to close the electrical circuit, it is further required to have a second electrical path from the indicator device 100 back to the power supply 380. This is achieved by the uninterrupted chain of signal contacts 10, 210 of connecting devices 1 and signal wires 60 of cables 80, 270 being electrically connected. A convenient way of ensuring this second chain of electrical connections along the entire chain, is to use corresponding signal contacts 10, 210 in all connecting devices 1, and corresponding signal wires 60 in all cables 80, 270 to transmit power from power supply 380 to all indicator devices 100 in the chain. In an RJ45 type environment, for example, it may be advantageous to use "Wire 8" in all plugs 5 and jacks 200 to transmit power to the indicator devices 100. No such ambiguity needs to be resolved for the shielding contacts 30, 220, as normally only one of them exists in each connecting device 1.

## Claims

1. Connecting device for a shielded telecommunication line, the connecting device comprising
- two or more signal contacts (10, 210),
- a shielding contact (30, 220), and
- an electrical indicator device (100),
wherein the electrical indicator device (100) is electrically connected such that it can be provided with electrical power through the shielding contact (30, 220) and one of the signal contacts (10, 210).

2. Connecting device according to claim 1, wherein the electrical indicator device (100) is a light-emitting device.

3. Connecting device according to any one of the previous claims, wherein the connecting device is adapted to be manually unmated from a corresponding connecting device and to be manually re-mated with a corresponding connecting device.

4. Connecting device according to any one of the previous claims,
wherein the connecting device is a plug adapted to cooperate with an RJ45-type jack, or
wherein the connecting device is a jack adapted to cooperate with an RJ45-type plug.

5. Connecting device according to any one of the previous claims, wherein the shielding contact (30, 220) is adapted to be permanently connected to a shielding conductor (70) of a shielded telecommunication line (80, 270).

6. Connecting device according to any one of the previous claims, wherein the connecting device is a plug, the plug comprising a first externally accessible feed contact (110), and a second externally accessible feed contact (115), the first feed contact (110) being electrically connected with one of the signal contacts (10, 210), and
the second feed contact (115) being electrically connected with the shielding contact (30, 220),
such that the electrical indicator device (100) can be provided with electrical power from an external power source through the first and second feed contacts (110, 115).

7. Shielded telecommunication line comprising a connecting device (1) according to any one of the previous claims.

8. Patch panel device or wall outlet, comprising a connecting device (1) according to any one of claims 1 to 6.

9. Power supply for providing electrical power to an electrical indicator device (100) of a connecting device (1) according to any one of claims 1 to 6, the power supply (380) comprising a connecting interface (480, 490) comprising output contacts (360, 370), which are adapted to simultaneously be in contact with a signal contact (10, 210) and the shielding contact (30, 220), respectively, of a connecting device (1) according to any one of claims 1 to 6.

10. Power supply for providing electrical power to an electrical indicator device (100) of a connecting device (1) according to any one of claims 1 to 6, the power supply (380) comprising a connecting interface (470) comprising output contacts (360, 370), which are adapted to simultaneously be in contact with the feed contacts (110, 115) of a connecting device (1) according to claim 6.

11. Power supply according to claim 9, further comprising a connecting interface (470) comprising output contacts (360, 370), which are adapted to simultaneously be in contact with the feed contacts (110, 115) of a connecting device (1) according to claim 6.

12. Power supply according to any one of claims 9 to 11, providing electrical power by providing alternating voltage between two of its output contacts (360, 370).

13. Power supply according to claim 12, wherein the frequency of the alternating voltage is between 1 kilohertz and 1000 kilohertz.

14. Power supply according to any one of claims 9 to 13, providing electrical power by providing a voltage between 0.1 Volt and 100 Volt between two of its output contacts (360, 370).
